Europäisches Patentamt

European Patent Office

Office européen des brevets

(19)

(11) Numéro de publication: **0 077 253 B1**

## (12) FASCICULE DE BREVET EUROPEEN

(45) Date de publication du fascicule du brevet: **05.02.86**

(51) Int. Cl.⁴: **G 08 C 25/00,** G 21 D 3/04

(21) Numéro de dépôt: **82401803.0**

(22) Date de dépôt: **04.10.82**

(54) **Dispositif de sécurité entre un système de commande d'un actionneur de sûreté et un circuit logique de commande de cet actionneur.**

(30) Priorité: **09.10.81 FR 8119028**

(43) Date de publication de la demande:
**20.04.83 Bulletin 83/16**

(45) Mention de la délivrance du brevet:
**05.02.86 Bulletin 86/6**

(84) Etats contractants désignés:
**BE DE FR GB IT**

(56) Documents cités:
**EP - A - 0 011 312**
**DE - A - 2 946 081**
**US - A - 3 919 533**
**US - A - 4 090 173**

(73) Titulaire: **COMMISSARIAT A L'ENERGIE ATOMIQUE Etablissement de Caractère Scientifique Technique et Industriel, 31/33, rue de la Fédération, F-75015 Paris (FR)**
Titulaire: **FRAMATOME ET CIE., Tour Fiat 1, Place de la Coupole, F-92400 Courbevoie (FR)**

(72) Inventeur: **Colling, Jean Marie, 10, rue de la Liberté, F-38130 Echirolles (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention concerne un dispositif de securite entre un systeme de commande d'actionneurs de sûreté et un circuit logique de commande de ces actionneurs. Elle s'applique notamment aux tests de systemes et de moyens de transmission qui permettent d'appliquer à un actionneur de sûrete des signaux de déclenchement urgent. Ces actionneurs de sûrete sont utilises par exemple, pour commander l'arrêt d'urgence d'un reacteur nucléaire.

On sait qu'un réacteur nucleaire, par exemple, comprend un grand nombre de dispositifs qui permettent de contrôler son fonctionnement. Ces dispositifs sont qualifiés d'actionneurs de sûrete. En cas d'incidents, ces actionneurs doivent pouvoir être déclenches de façon urgente, de maniere que leur action de protection puisse arréter cet incident. Dans les reacteurs nucléaires, on mesure les valeurs d'un certain nombre de grandeurs physiques telles que la pression, la temperature, le flux neutronique, etc..., en un certain nombre de points, grâce à des capteurs. Les valeurs analogiques de ces grandeurs sont converties en valeurs numeri-ques que l'on compare ensuite dans des systemes de traitement, avec des valeurs de reference. Ces systemes de traitement permettent en outre de commander un ou plusieurs actionneurs de sûrete. Ils delivrent normalement un signal logique de comparaison qui est, par exemple, de valeur non nulle, lorsque les valeurs numériques des grandeurs physiques sont situees dans une fourchette de valeurs de reference definies à l'avance et correspondant au fonctionnement normal de l'appreil ou du réacteur sous surveillance. Lorsque les grandeurs physiques mesurées par les capteurs sortent de cette fourchette de sécurité, le ou les systeme de traitement et de commande délivre des signaux logiques de sortie de valeur nulle par exemple, pour chacune des valeurs de mesure qui sort de la fourchette de sécurité. Ces signaux logiques de sortie de système de traitement sont appliqués séquentiellement, par des moyens de communication qui seront décrits plus loin en détail, à l'entrée d'un circuit logique dont les sorties commandent des actionneurs de sûreté. Généralement, ce circuit logique est conçu de sorte qu'une action de protection soit déclenchée lorsqu'au moins la moitié des voies redondantes des moyens de communication applique sur au moins la moitié des entrées de ce circuit logique des signaux de commande de déclenchement d'actions de protection. Ces circuits logiques permettent aussi, comme indiqué dans la demande de brevet européen EP-A- 0053082, publié le 2.6.82 après la date de priorité de la présente demande et déposé au nom du même demandeur, d'inhiber certaines des voies de transmission, pour effectuer des tests, par exemple, des circuits ou du système situés en amont de ces voies. Ces circuits situés en amont peuvent étre, par exemple, des chaînes d'amplification et de traitement des signaux, reliées aux capteurs mentionnés plus haut.

Il est particulièrement utile, pour des raisons de sécurité, de déclencher l'actionneur de sûreté, par l'intermédiaire du circuit logique qui le commande, en cas de défaillance dans la transmission des signaux logiques de commande émis par le système de traitement et de commande vers le circuit logique, ou en cas de défaillance de ce système. Des dispositifs permettant ce type de déclenchement sont décrits dans le brevet EP-A- 011 312 et dans le brevet US-A-3 919 533. Ces dispositifs ne permettent toutefois pas, de manière simple et de façon permanente, de vérifier que la transmission séquentielle des signaux entre un système de traitement et de commande et un circuit logique de commande d'un actionneur de sûreté, s'effectue sans défaillance et de vérifier aussi que le système de traitement et de commande lui-méme, ne présente aucune défaillance.

La présente invention a pour but de remédier à ces inconvénients et notamment de réaliser un dispositif de sécurité entre un système de commande d'un actionneur de sùreté et un circuit logique de commande de cet actionneur, ce dispositif permettant de façon simple et en permanence, de vérifier que les signaux logiques émis par le système vers le circuit logique sont transmis sans défaillance, et de vérifier que le système de commande lui-méme ne présente aucune défaillance.

L'invention a pour objet un dispositif de sécurité entre un système de commande d'un actionneur de sûreté et un circuit logique de commande de cet actionneur, comprenant des moyens séquentiels de transmission de signaux logiques émis par le système de commande vers le circuit logique, des moyens séquentiels de vérification, pour appliquer au circuit logique des signaux de déclenchement de l'actionneur, en cas de défaillance du système de commande ou en cas de défaillance des moyens de transmission, la transmission des signaux entre le système et le circuit logique étant effectuée après vérification de la non défaillance des moyens de transmission, les moyens séquentiels de vérification comprenant des moyens de temporisation, connectés entre le système et les moyens de transmission et une horloge de commande de ces moyens de temporisation, les moyens de transmission appliquant au circuit logique des signaux logiques de déclenchement de l'actionneur, en cas de défaillance du système, si après un intervalle de temps prédéterminé les moyens de temporisation n'ont pas reçu un signal de réarmement en provenance du système, les moyens de temporisation étant constitués par un compteur dont la sortie est dans un premier état logique pendant une période déterminée correspondant à la vérification de la non défaillance du système et des moyens de transmission, et à la transmission des signaux logiques émis par le système, cette sortie étant ensuite dans un deuxième état logique pendant ledit intervalle de temps prédéterminé correspondant au temps qui s'écoule entre d'une part, l'instant de basculement du premier état logique vers le deuxième état logique et, d'autre part, l'instant où le système applique à ce compteur ledit signal de réarmement, ledit intervalle de temps prédéterminé ayant une durée inférieure au temps de réponse du circuit logique, caractérisé en ce que les moyens de vérification comprennent en outre des moyens de comparaison des états logiques des signaux émis par le système et des signaux issus des moyens de transmission, de sorte qu'en cas de différence entre ces signaux, une sortie des moyens de comparaison applique au système un signal d'erreur pour que celui-ci n'applique pas de signal de réarmement auxmoyens de temporisation, après l'intervalle de temps prédéterminé, les moyens de transmission appliquant ainsi au circuit logique des signaux de déclenchement de l'actionneur.

Selon une autre caractéristique, les moyens de transmission comprennent une pluralité de voies de transmission reliant des entrées du circuit logique avec des sorties d'un registre recevant les signaux logiques émis par le système, chaque voie comprenant deux interrupteurs commandables, reliés en série entre une sortie du registre et une entrée du circuit logique, le premier interrupteur étant commandé par le niveau logique du signal émis par le système et provenant de la sortie correspondante du registre, le deuxième interrupteur étant commandé par le signal de la sortie du compteur, de sorte à étre ouvert pendant ledit intervalle de temps prédéterminé, ou en cas de défaillance.

D'autres caractéristiques et avantages de l'invention ressortiront mieux de la description qui va suivre donnée en référence aux dessins annexés dans lesquels:

- la figure 1 représente schématiquement un ensemble de commande d'actionneurs de sûreté dans lequel intervient un dispositif de sécurité conforme à l'invention;
- la figure 2 représente, de manière plus détaillée, un dispositif de sécurité conforme à l'invention ;
- la figure 3 est un chronogramme des signaux qui interviennent en certains points du dispositif de sécurité.

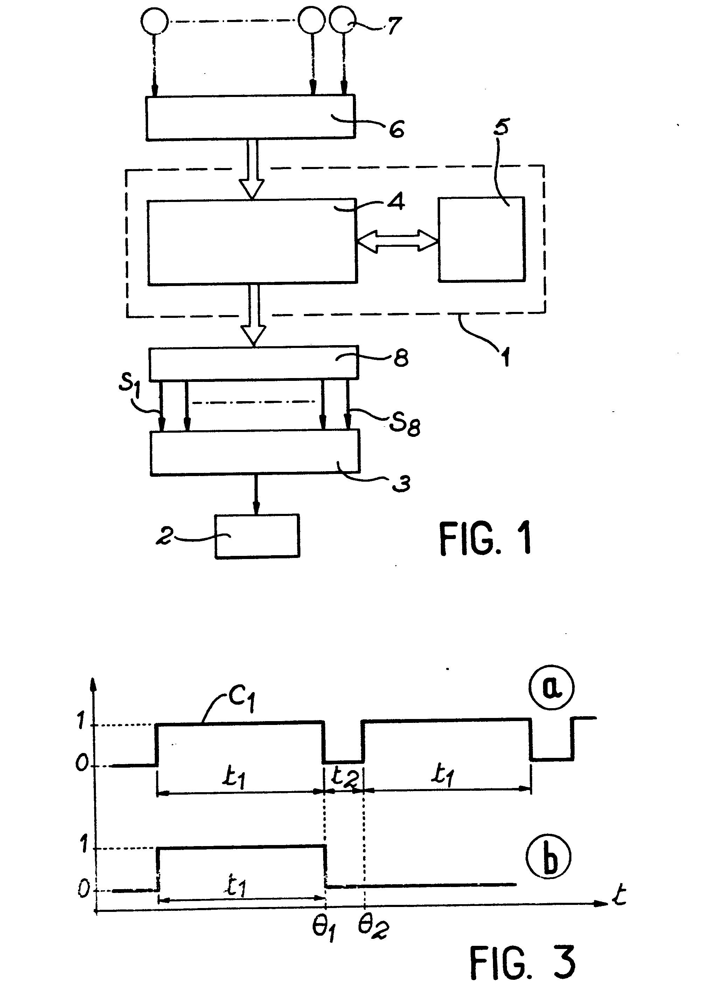

La figure 1 représente schématiquement un ensemble de sécurité dans lequel intervient un dispositif de sécurité conforme à l'invention. Cet ensemble de sécurité comprend un système 1 qui permet de commander des actionneurs de sûreté 2, par l'intermédiaire d'un circuit logique de commande 3. Le système de commande 1 peut être constitué par exemple par un processeur ou un microprocesseur 4, associé à une mémoire 5. Ce microprocesseur reçoit par exemple, par l'intermédiaire d'un interface 6 des signaux de mesure provenant de capteurs 7. Ces signaux de mesures sont généralement des signaux analogiques qui sont transformés par des circuits (non representes), à l'interieur de l'interface 6, en valeurs numeriques. Les valeurs numériques de mesures sont comparées à des valeurs de reference relatives à chacun des signaux de mesures, enregistrees dans la memoire 5. 8i des valeurs numériques representatives des signaux de mesures sont situées en dehors de fourchettes numériques de securite, le systeme de commande 1 fournit pour ces valeurs, au circuit logique 3, des signaux logiques de commande de déclenchement d'action urgente de l'actionneur 2. Generalement et comme on l'a indique plus haut, cette action urgente n'est declenchee que si un certain nombre de signaux logiques redondants qui parviennent aux entrees du circuit logique 3, sont ü un niveau logique correspondant ü une commande de declenchement d'action urgente. Generalement, ce niveau logique est un niveau logique bas : absence de tension. Le dispositif de l'invention est représenté en 8 sur cette figure. Ce dispositif logique permet, comme on le verra plus loin en détail, d'assurer une transmission sequentielle des signaux logiques émis par le systäme de commande 1, vers le circuit logique 3. Ce dispositif permet également d'appliquer ü ce circuit logique des signaux de déclenchement de l'actionneur 2 en cas de défaillance des systemes de commande 1 ou en cas de defaillance des moyens de transmission (schematisé par les voies $S_1$, ...$S_8$). Ces moyens de transmission sont constitués par plusieurs voies relatives à des actions de protection différentes et le dispositif de l'invention permet de déclencher une action urgente en cas de défaillance d'une ou plusieurs des voies. Bien entendu, ces voies de transmission peuvent également transmettre des signaux logiques de déclenchement de l'actionneur 2, en dehors de toute defaillance du système de commande ou des moyens de transmission.

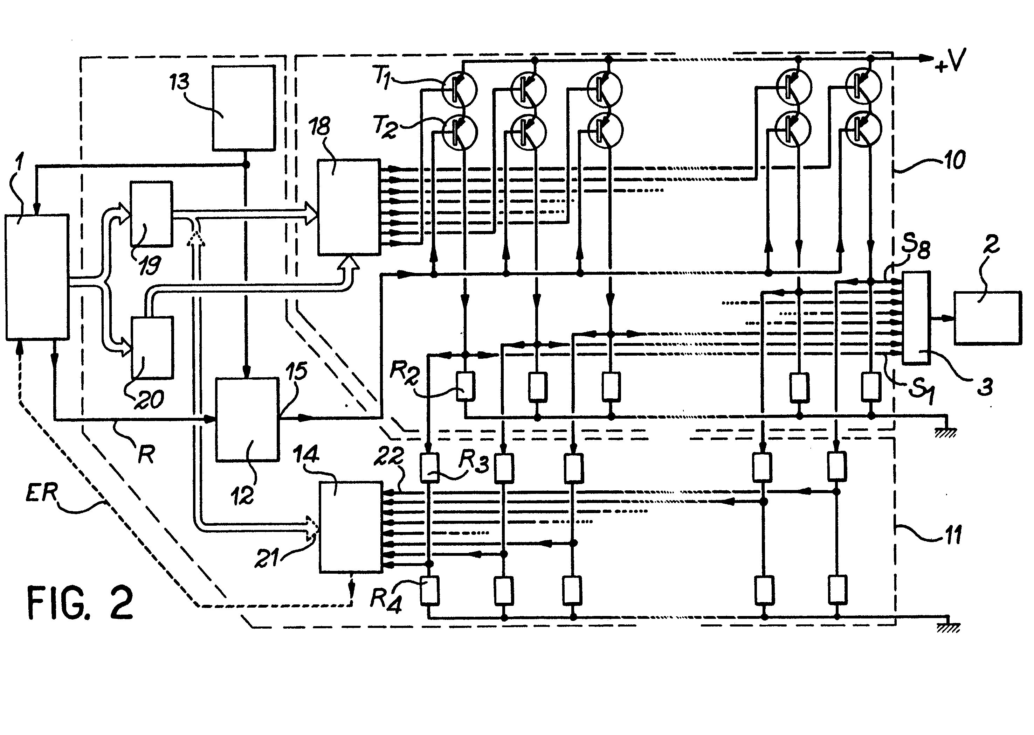

La figure 2 represente, de maniere plus detaillée, le dispositif de securite, conforme ü l'invention. Ce dispositif de securité comprend des moyens séquentiels 10 de transmission des signaux logiques emis par le systeme de commande 1 vers le circuit logique 3. Ce dispositif comprend aussi des moyens sequentiels 11 de vérification, qui permettent d'appliquer au circuit logique 3 des signaux de declenchement de l'actionneur (non represente), en cas de defaillance du systeme de commande 1 ou en cas de defaillance des moyens de transmission 10.

Les moyens de vérification 11 comprennent des moyens de temporisation 12 constitués par un compteur dont le rôle sera explique plus loin en detail. Ces moyens de verification comprennent aussi une horloge 13 qui commande le compteur 12 et qui permet egalement de synchroniser le systeme de commande 1. Enfin, ces moyens de verification comprennent des moyens de comparaison 14 qui appliquent au systeme 1 un signal d'erreur ER dans le cas où les signaux emis par le systeme et les signaux reçus par le circuit logique sont discordants. Le signal d'erreur ER agit sur le systäme 1 pour que celui-ci n'applique pas un signal de réarmement R aux moyens de temporisation 12, apres un intervalle de temps predetermine.

Le compteur 12 est un compteur qui peut étre rearme et dont la sortie 15 est dans un état logique 1 pendant une periode qui correspond à la transmission des signaux emis par le systeme 1, à la verification de la non defaillance du systeme et de la non defaillance des moyens de transmission 10. La sortie de ce compteur bascule ensuite vers un etat logique 0. Ce deuxieme état logique est present pendant un intervalle de temps predetermine qui correspond au temps qui s'ecoule entre d'une part, l'instant de basculement du premier etat logique vers le deuxieme état logique et, d'autre part, l'instant où le systeme 1 applique ü ce compteur le signal de rearmement R. En fait et comme on le verra plus loin en detail, si l'on considere que l'action de protection est déclenchee par des niveaux logiques 0 appliques au circuit logique 3, la transmission des signaux logiques du systeme vers les voies de communication, ne peut étre effectuee que si des transistors tels que $T_2$ appartenant aux moyens de communication qui seront decrits plus loin en detail, sont rendus passants. Ces transistors sont rendus passants lorsqu'un niveau logique 1 est appliqué sur leurs bases. La transmission des signaux logiques emis par le systeme 1 est donc effectuee pendant la période determinee qui correspond ü la production d'un signal présentant un état logique 1 sur la sortie 15 du compteur 12. Le deuxieme état logique de la sortie 15 du compteur 12 est un niveau logique 0 qui bloque les transistors tels que $T_2$ et qui rend donc impossible la transmission des signaux logiques du systeme de commande vers le circuit logique 3. Ce niveau logique 0

3

correspond ü l'application de signaux de declenchement sur les entrees du circuit logique 3. Comme on le verra plus loin en détail, l'intervalle de temps predetermine mentionne plus haut, est inferieur au temps de reponse du circuit logique 3.

Les moyens de transmission 10 comprennent une pluralite de voies de transmission dont les sorties sont representees en $S_1$, ...$S_8$ et dont le nombre est egal à 8 dans l'exemple de realisation decrit, ce nombre pouvant bien entendu être different. Ces voies de transmission relient les entrees du circuit logique 3 avec des sorties d'un registre 18 qui reçoit les signaux logiques emis par le systeme 1, par exemple par l'intermediaire d'un decodeur d'ordres 19 et d'un decodeur d'adresses 20. Chaque voie de transmission comprend deux interrupteurs qui sont relies en série entre une sortie du registre 18 et une entree correspondante du circuit logique 3. Ces interrupteurs sont realises par des transistors tels que $T_1$ et $T_2$. Dans l'exemple de realisation considere, ces transistors sont de type PNP. Le collecteur du transistor $T_1$ est relie ü l'emetteur du transistor $T_2$, tandis que l'émetteur du transistor $T_1$ est porte à une tension de polarisation $+V$ ; le collecteur du transistor $T_2$ est relie ü une masse de reference M par l'intermediaire d'une resistance $R_2$. Les bases des transistors $T_2$ sont reliees ü la sortie 15 du compteur 12, tandis que les bases des transistors $T_1$ sont reliees aux sorties correspondantes du registre 18. En fait, les premiers interrupteurs constitues par les transistors $T_1$ sont commandes par les signaux correspondants provenant du registre 18, tandis que les deuxiemes interrupteurs constitues par les transistors $T_2$ sont commandés par le signal de la sortie 15 du compteur 12. Les transistors $T_2$ sont bloques pendant l'intervalle de temps predetermine mentionne plus haut, ou en cas de defaillance, comme on le verra plus loin en detail.

La figure 3 est un chronogramme qui represente en <u>a</u> et <u>b</u>, les états logiques de la sortie 15 du compteur 12 dans deux cas de fonctionnement du dispositif.

En <u>a</u>, on a represente le fonctionnement normal du dispositif dans le cas où il n'y a pas de defaillance du systeme de commande 1 ou pas de defaillance d'une ou plusieurs voies des moyens de communication 10. Dans ce cas, le compteur reglable 12 commande par l'horloge 13, fournit en sortie des signaux $C_1$ de periode determinee $t_1$. Ces signaux présentent un premier état logique 1 et c'est durant cette période que sont transmis les signaux logiques émis par le systeme de commande 1 et qu'est ensuite vérifiée la non défaillance du systeme 1 et des moyens de communication 10 pour la transmission des signaux logiques de la séquence suivante. Durant cette période $t_1$, la sortie 15 du compteur 12 est ü un niveau logique 1. Ce niveau logique permet de rendre passants les deuxièmes interrupteurs constitués par les transistors $T_2$. Lorsqu'il n'y a pas de defaillance du systeme de traitement 1 ou des moyens de transmission 10, après un intervalle de temps prédéterminé $t_2$, le systeme de commande 1, synchronisé sur l'horloge 13, applique au compteur 12 le signal de réarmement R. Ce signal permet de commander le compteur de manière que sa sortie 15 passe de nouveau à un état logique 1 pendant une nouvelle période de durée $t_1$.

Le cas <u>b</u> correspond à une défaillance, soit du système de commande 1, soit des moyens de communication 10. On considère ici que la transmission des signaux logiques du système vers le circuit logique 3, s'est effectuée normalement jusqu'à l'instant $\theta_1$ de basculement de la sortie du compteur 12 vers le niveau logique 0. En cas de defaillance du systeme de commande I, celui-ci ne fournit pas, à l'instant $\theta_2$, après l'intervalle de temps prédéterminé $t_2$, qui sépare cet instant $\theta_2$ de l'instant $\theta_1$ auquel la sortie du compteur avait basculée, un signal de réarmement R. Il en résulte que la sortie du compteur reste alors dans l'état logique 0, et que les deuxièmes interrupteurs constitués par les transistors $T_2$ sont ouverts (transistors bloqués) ; ceci correspond ü l'application de signaux logiques 0 sur les entrées du circuit logique 3, ces signaux provoquant le déclenchement de l'actionneur. Le processus est identique lors d'une défaillance des moyens de communication 10. En effet, lors d'une defaillance de ces moyens de communication, le systeme 1 acquiert par l'intermediaire du dispositif de comparasion, un signal derreur pour que le système (1) ne commande plus l'emission du signal de réarmement R, apràs l'intervalle de temps $t_2$. Il en résulte alors, comme précédemment, que la sortie 15 du compteur 12 reste à un état logique 0, au-delü de cet intervalle de temps $t_2$, ce qui entraîne l'application de signaux de déclenchement sur les entrées du circuit logique 3 de commande de l'actionneur 2.

Il est bien évident que les moyens de transmission 10 permettent de transmettre des signaux de déclenchement provenant du système de commande 1, en dehors de toute défaillance de ce systeme ou de toute défaillance des moyens de transmission 10. Dans ce cas, le compteur 12 fournit bien des signaux logiques tels que $C_1$, de niveau logique 1, mais comme les signaux appliqués aux transistors $T_1$ sont à un niveau logique O correspondant à la commande de défaillance, et les sorties $S_1$ à $S_8$ du dispositif sont à un niveau logique 0 correspondant au déclenchement de l'actionneur 2.

## Revendications

1. Dispositif de sécurité entre un système de commande (1) d'un actionneur de sûreté (2) et un circuit logique (3) de commande de cet actionneur, comprenant des moyens séquentiels (10) de transmission de signaux logiques émis par le système de commande (1) vers le circuit logique (3), des moyens séquentiels (11) de vérification, pour appliquer au circuit logique (3) des signaux de déclenchement de l'actionneur (2), en cas de défaillance du système de commande (1) ou en cas de défaillance des moyens de transmission (10), la transmission des signaux entre le système (1) et le circuit logique (3) étant effectuée après vérification de la non défaillance des moyens de transmission (10), les moyens séquentiels de vérification (11) comprenant des moyens de temporisation (12), connectés entre le système (1) et les moyens de transmission (10) et une horloge (13) de commande de ces moyens de temporisation (12), les moyens de transmission (10) appliquant au circuit logique (3) des signaux logiques (S₁·.... S₈) de déclenchement de l'actionneur (2), en cas de défaillance du système (1), si après un intervalle de temps prédéterminé (t₂) les moyens de temporisation (12) n'ont pas reçu un signal de réarmement (R) en provenance du système (1), les moyens de temporisation (12) étant constitués par un compteur dont la sortie (15) est dans un premier état logique pendant une période déterminée (t₁) correspondant à la vérification de la non défaillance du système (1) et des moyens de transmission (10), et à la transmission des signaux logiques émis par le système (1), cette sortie (15) étant ensuite dans un deuxième état logique pendant ledit intervalle de temps prédéterminé (t₂) correspondant au temps qui s'écoule entre d'une part, l'instant (8₁) de basculement du premier état logique vers le deuxième état logique et, d'autre part, l'instant (8₂) où le système (1) applique à ce compteur ledit signal de réarmement (R), ledit intervalle de temps prédéterminé (t₂) ayant une durée inférieure au temps de réponse du circuit logique (3), caractérisé en ce que les moyens de vérification comprennent en outre des moyens de comparaison (14) des états logiques des signaux émis par le système (1) et des signaux (S₁, ... S₈) issus des moyens de transmission (10), de sorte qu'en cas de différence entre ces signaux, une sortie des moyens de comparaison applique au système (1) un signal d'erreur (ER) pour que celui-ci n'applique pas de signal de réarmement (R) au moyen de temporisation (12), après l'intervalle de temps prédéterminé (t₂), les moyens de transmission (10) appliquant ainsi au circuit logique (3) des signaux de déclenchement de l'actionneur (2).

2. Dispositif selon la revendication 1, caractérisé en ce que les moyens de transmission (10) comprennent une pluralité de voies de transmission (T₁, T₂, R₂, S₁, ... S₈) reliant des entrées du circuit logique (3) avec des sorties d'un registre (18) recevant les signaux logiques émis par le système (1), chaque voie comprenant deux interrupteurs (T₁, T₂) commandables, reliés en série entre une sortie du registre (18) et une entrée du circuit logique (3), le premier interrupteur (T₁) étant commandé par le niveau logique du signal émis par le système (1) et provenant de la sortie correspondante du registre (18), le deuxième interrupteur (T₂) étant commandé par le signal de la sortie (15) du compteur (12), de sorte à être ouvert pendant ledit intervalle de temps prédéterminé (t₂), ou en cas de défaillance.

## Patentansprüche

1. Sicherheitseinrichtung zwischen einem Steuersystem (1) für einen Sicherheitsschalter und einem logischen Schaltkreis (3) zum Steuern des Schalters, mit einer Einrichtung (10) zur seriellen Übertragung logischer Signale, die von dem Steuersystem (1) an den logischen Schaltkreis (3) abgegeben werden, mit einer seriellen Kontrolleinrichtung (11) um an den logischen Schaltkreis (3) Auslösesignale für den Schalter (2) bei Ausfall des Steuersystems (1) oder bei Ausfall der Übertragungseinrichtung (10) abzugeben, wobei die Signalübertragung zwischen dem System (1) und dem logischen Schaltkreis (3) nach Überprüfung, daß die Übertragungseinrichtung (10) nicht ausgefallen ist, geschieht, wobei die serielle Kontrolleinrichtung (11) Verzögerungsmittel (12) umfaßt, die zwischen dem System (1) und der Übertragungseinrichtung (10) angeordnet sind, sowie eine Zeitsteuerung (13) dieser Verzögerungsmittel (12) und wobei die Übertragungseinrichtung (10) im Falle eines Ausfalls des Systems (1) logische Signale (S₁,... S₈) an den logischen Schaltkreis (3) für das Auslösen des Schalters (2) abgibt, wenn nach einem vorbestimmten Zeitintervall (t₂) die Verzögerungseinrichtung (12) nicht ein Rückstellsignal (R) vom System (1) erhalten hat, und wobei die Verzögerungseinrichtung (12) einen Zähler umfaßt, dessen Ausgang (15) während eines ersten bestimmten Zeitabschnittes (t₁) in einem ersten logischen Schaltzustand ist, solange das System (1) und die Übertragungseinrichtung (10) nicht ausgefallen ist, und wobei zur Übertragung logischer Signale, die von dem System (1) abgegeben werden, der Ausgang (15) nachfolgend während des genannten bestimmten Zeitintervalls (t₂) in einem zweiten Schaltzustand ist, über eine Zeit, die vom Moment (θ) des Umschaltens vom ersten logischen Schaltzustand in den zweiten logischen Schaltzustand bis zu dem Moment (θ₂) in dem das System (1) an dem Zähler das Rückstellsignal (R) abgibt, wobei die Dauer dieses bestimmten Zeitintervalls (t₂) unterhalb der Ansprechzeit des logischen Schaltkreises (3) liegt, dadurch gekennzeichnet, daß die Kontrolleinrichtung weiterhin Mittel zum Vergleichen (14) der logischen Zustände der Signale, die von dem System (1) und der Signale (S₁,... S₈), die von der Übertragungseinrichtung (10) abgegeben werden, umaßt, derart, daß die Vergleichseinrichtung am Ausgang im Falle eines Unterschieds zwischen diesen Signalen an das System (1) ein Fehlersignal (ER) abgibt, damit diese kein Rückstellsignal (R) an die Verzögerungsschaltung (12) abgibt, wobei nach dem Verstreichen des bestimmten Zeitintervalls (t₂) die Übertragungseinrichtung (10) ebenfalls an den logischen Schaltkreis (3) die Auslössignale für den Schalter (2) abgibt.

2. Einrichtung nach Anspruch 1, dadurch gekenn- zeichnet, daß die Übertragungseinrichtung (10) mehrere Übertragungsstrecken (T₁, T2, R₂, S₁,...S₈) umfaßt, die die Ausgänge eines Registers (18), welches die logischen Signale von dem System (1) erhält, mit den Eingängen der logischen Schaltung (3) verbinden, wobei jede Übertragungsstrecke zwei steuerbare Schalter (T₁, T₂) umfaßt, die in Serie zwischen einem Ausgang des Registers (18) und einem Eingang des logischen Schaltkreises (3) gelegen sind, wobei der erste Schalter (T₁) mittels des Schaltzustandes des logischen Signales, welches von dem System (1) abgegeben wird und an den Ausgang des entsprechenden Registers (18) gelangt, gesteuert wird und wobei der zweite Schalter (T₂) über das Signal am Ausgang (15) des Zählers (12) derart geschaltet wird, daß er während des genannten vorbestimmten

Zeitintervalls (t$_2$) oder im Falle eines Ausfalls geöffnet ist.

**Claims:**

1. Security device between a command system (1) for a safety actuator (2) and a logic circuit (3) for commanding said actuator, comprising sequential means (10) for transmission of logic signals emitted by the command system (1) to the logic circuit (3), sequential verification means (11) for supplying release signals for the actuator (2) to the logic circuit (3) in the case of failure in the command system (1) or in the case of failure of the transmission means (10), the transmission of signals between the system (1) and the logic circuit (3) being effected after verification of non-failure of the transmission means (10), the sequential verification means (11) comprising delay means (12) connected between the system (1) and the transmission means (10), and a command timer (13) for the delay means (12), the transmission means (10) supplying logic signals (S$_1$,...S$_8$) for release of the actuator (2) to the logic circuit in the case of failure of the system (1) if after a predetermined time interval (t$_2$) the delay means (12) have not received a resetting signal (R) from system (1), the delay means (12) being constituted by a counter whose output (15) is in a first logic state during a predetermined period (t$_1$) corresponding to verification of the non-failure of the system (1) and the transmission means (10), and during transmission of logic signals emitted by the system (1), said output (15) being subsequently in a second logic state during said predetermined time interval (t$_2$) corresponding to the time elapsing between the instant ($\theta_1$) for shift from the first logic state to the second logic state, on the one hand, and the instant ($\theta_2$) where the system (1) supplies said resetting signal (R) to the counter, on the other hand, said predetermined time interval (t$_2$) having a duration less than the response time of the logic circuit (3), characterized in that the verification means additionally comprise means (14) for comparing the logic states of the signals emitted by the system (1) and the signals (S$_1$....S$_8$) issuing from the transmission means (10), whereby the comparison means supply an error signal (ER) to the system (1) in the case of a difference between said signals, while not supplying the resetting signal (R) to the delay means (12), after the predetermined interval of time (t$_2$), the transmission means (10) thereby supplying signals for release of the actuator (2) to the logic circuit (3).

2. Device according to Claim 1, characterized in that the transmission means (10) comprise a plurality of transmission paths (T$_1$,T$_2$,R$_2$,S$_1$...S$_8$) connecting inputs of logic circuit (3) with outputs of a register (18) receiving logic signals emitted by the system (1), each path comprising two commandable circuit-breakers (T$_1$,T$_2$) connected in series between an output of the register (18) and an input of the logic circuit (3), the first circuit-breaker (T$_1$) being commanded by the logic level of the signal emitted by the system (1) and issuing at the corresponding output of the register (18), the second circuit-breaker (T$_2$) being commanded by the signal at the output (15) of the counter (12), whereby to be open during said predetermined time interval (t$_2$), or in the case of failure.

FIG. 1

FIG. 3

1

FIG. 2